# EUROPÄISCHE PATENTANMELDUNG

(11) **EP 1 992 226 A1**
(43) Veröffentlichungstag der Anmeldung: **19.11.2008**
(21) Anmeldenummer: 07009767.0
(22) Anmeldetag: 16.05.2007
(51) Int. Cl.: A01N 25/00, A01N 35/02, A01N 43/24, A01N 57/20, A01P 9/00

(54) **Schneckenköder**

(71) Anmelder: Bayer CropScience Aktiengesellschaft, 40789 Monheim (DE)
(72) Erfinder: Die Erfindernennung liegt noch nicht vor

(57) **Zusammenfassung**

Die vorliegende Erfindung betrifft die Verwendung einer Kartoffelzubereitung oder einer Kombination aus Kartoffelzubereitung und Hefe zur Verbesserung der Attraktivität von molluskiziden Zusammensetzungen für Schnecken. Sie betrifft ebenfalls entsprechende Zusammensetzungen, Verfahren zur Herstellung dieser Zusammensetzungen und deren Verwendung zur Bekämpfung von terrestrischen Schnecken.

## Beschreibung

Die vorliegende Erfindung betrifft die Verbesserung der Wirkung von Schneckenködern, entsprechende Schneckenköder, Verfahren zu deren Herstellung und deren Verwendung zur Bekämpfung von Schnecken.

Es ist bereits bekannt, terrestrische Schnecken mit Hilfe von Ködern zu bekämpfen, die Fraßstoffe und molluskizide Wirkstoffe, wie Methiocarb, Metaldehyd oder Metallchelate enthalten (vgl. DE 35 03 608A, DE 36 12 161A, WO 96-05 728A, WO 97-26 789A, WO 99-25 194A, WO 99-39 576A und WO 00-11 948A). Die Wirksamkeit dieser Präparate ist aber nicht immer befriedigend.

Es ist weiterhin bekannt, dass Schneckenköder, ob sie nun Fraß- oder Kontaktwirkstoffe enthalten, Komponenten enthalten müssen, die leicht flüchtige Verbindungen freisetzen, so dass die Schnecken von der Nutzpflanze wie z.B. Gemüse oder Salat abgelenkt und zum Köder gelockt werden. Zusätzlich müssen die übrigen Rezepturkomponenten der Fraßmittel so beschaffen sein, dass die Schnecken eine möglichst große Menge des Köders fressen, so dass sie eine letale Dosis des entsprechenden Wirkstoffs aufnehmen.

Üblicherweise sind die meisten Schneckenköder auf Basis von Getreidemehlen formuliert, die die Eigenschaft haben, dass sie trocken oder nass extrudiert werden können. Je nach Verfahren kann dem Mehl auch mehr oder weniger Kleie oder Hüllbestandteile zugesetzt werden. Als Getreidemehle kommen z.B. Weichweizen- oder Hartweizenmehl in Frage (EP 1 107 666).

Von vielen Schwermetallen wie z.B. Aluminium, Kupfer, Mangan, Zink, Nickel und Eisen ist bekannt, dass sie eine molluskizide Wirkung haben (GB 2207866). Diese Schwermetalle haben aber insbesondere den Nachteil des schlechten Geschmacks für die Schnecken, so dass sie in Form ihrer anorganischen Salze eine nicht ausreichende molluskizide Wirkung besitzen. In der Folgezeit wurde aber gefunden, dass der Geschmack der Metallionen durch Überführung in organische Komplexverbindungen verbessert wird (US 5,437,870; WO 96/05728, EP 0 725 562; WO 04/075634). Die Schnecken fressen so eine größere Menge der als organische Komplexe formulierten Metalle, was wiederum dazu führt, dass die toxische Dosis erreicht wird.

Es wurde nun überraschenderweise gefunden, dass Zusammensetzungen, die eine Kartoffelzubereitung enthalten, von Schnecken besonders gerne und viel gefressen werden, wodurch die molluskizide Wirkung erhöht wird.

Gegenstand der vorliegenden Erfindung ist deshalb die Verwendung einer Kartoffelzubereitung zur Verbesserung der Attraktivität von molluskiziden Zusammensetzungen für Schnecken.

Gegenstand der vorliegenden Erfindung sind weiterhin molluskizide Zusammensetzungen (im Folgenden auch Schneckenköder genannt), die eine Kartoffelzubereitung enthalten, sowie Verfahren zu ihrer Herstellung und ihre Verwendung zur Bekämpfung von Schnecken.

Es wurde weiterhin gefunden, dass sich die Attraktivität von Kartoffelzubereitung enthaltenden Schneckenködern weiter steigern lässt, wenn diese weiterhin Hefe (bevorzugt Bierhefe) enthalten.

Gegenstand der vorliegenden Erfindung ist deshalb die Verwendung von Hefe zur Verbesserung der Attraktivität von Kartoffelzubereitung enthaltenden molluskiziden Zusammensetzungen für Schnecken bzw. die Verbesserung der Attraktivität molluskizider Zusammensetzungen für Schnecken durch die Zugabe von Kartoffelzubereitung und Hefe.

Gegenstand der vorliegenden Erfindung sind weiterhin Schneckenköder, die eine Kartoffelzubereitung und Hefe enthalten, sowie Verfahren zu ihrer Herstellung und ihre Verwendung zur Bekämpfung von Schnecken.

Eine erfindungsgemäß einsetzbare Kartoffelzubereitung wird aus Kartoffeln gewonnen. In einer Ausführungsform der Erfindung wird die Kartoffelzubereitung durch das Zerkleinern und Trocknen gekochter (geschälter oder ungeschälter, bevorzugt geschälter) Kartoffeln gewonnen. In einer anderen Ausführungsform der Erfindung wird die Kartoffelzubereitung durch das Zerkleinern und Trocknen roher (geschälter oder ungeschälter, bevorzugt geschälter) Kartoffeln gewonnen. Diese Verfahren sind bekannt, z.B. aus der Nahrungsmittelindustrie zur Herstellung von Kartoffelpüree.

Eine bevorzugte erfindungsgemäße Kartoffelzubereitung zeichnet sich durch einen Wassergehalt von unter 10 Gew.-% aus. Optional kann sie weitere Zusatzstoffe wie Antioxidationsmittel oder Emulgatoren enthalten, allerdings nur bis zu einem Gesamtgehalt von 5 Gew.-%, wobei diese Zusatzstoffe keinen wesentlichen Einfluss auf die Attraktivitätsverbesserung haben, die durch die Kartoffelzubereitung erreicht wird. Sie dienen lediglich der besseren Handhabbarkeit der Zubereitung.

Es lassen sich erfindungsgemäß alle Schneckenköder verbessern, unabhängig vom verwendeten molluskiziden Wirkstoff. Es kann sich bei dem Wirkstoff beispielweise um Methiocarb, Metaldehyd, ein molluskizides Metallsalz oder ein molluskizides Metallsalz-Chelat handeln. Erfindungsgemäß bevorzugt ist Kartoffelzubereitung (oder die Kombination aus Kartoffelzubereitung und Hefe) verwendbar zur Verbesserung der Attraktivität von Schneckenködern, die als Wirkstoff mindestens ein Eisensalz und/oder mindestens ein Eisensalzchelat enthalten. Als Chelatbildner sind dabei alle üblicherweise eingesetzten Substanzklassen geeignet, z.B. Phosphonsäuren, Ethylendiamintetraacetat (EDTA) und seine Derivate, Pektine und ihre Derivate, Iminodisuccinat, Iminodifumarat, Iminoditartrat, Iminodimaleat, Ethylendiamindifumarat, Ethylen-diamindimaleat, Iminodimaleat, Ethylendiamineditartrat, Ethylendiamindimaleat, Ethylendiamindisuccinat etc.

Besonders bevorzugt ist die Verwendung von Kartoffelzubereitung (oder der Kombination aus Kartoffelzubereitung und Hefe) zur Verbesserung der Attraktivität bei Schneckenködern enthaltend
a) mindestens einen Phosphonsäureester der Formel (I) 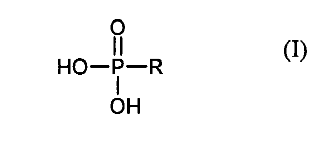 in welcher R für C₁-C₁₀-Alkyl steht,
   welches einfach oder mehrfach, gleich oder verschieden durch PO₃H₂, CO₂H, OH, NH₂, CN, Halogen, C₁-C₈-Alkylamin oder Di-(C₁-C₈)-alkylamin substituiert ist und welches gegebenenfalls durch 1-6 Heteroatome aus der Reihe N, O, S, P unterbrochen ist, wobei Heteroatome nicht direkt miteinander verknüpft sind;
   und
   Ammonium-, Alkalimetall-, Erdalkalimetall- und/oder Eisen-Salze;
   oder
b) mindestens ein Ammonium-, Alkalimetall-, Erdalkalimetall- und/oder Eisen-Salze der Phosphonsäureester der Formel (I).

Gegebenenfalls enthalten die erfindungsgemäßen Schneckenköder weitere Komponenten, z.B.:
- feinkörniges Getreidemehl und/oder
- Bindemittel und/oder
- weitere Zusatzstoffe.

Die erfindungsgemäßen Schneckenköder lassen sich nach allgemein bekannten Verfahren herstellen.

Die erfindungsgemäß besonders bevorzugten Schneckenköder lassen sich beispielsweise herstellen, indem man
1. eine Vormischung aus
   - Phosphonsäureester der Formel (I) 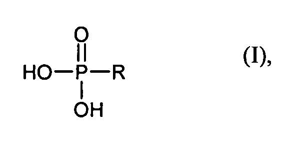 und Ammonium-, Alkalimetall-, Erdalkalimetall- und/oder Eisen-Salzen,
      oder
      Ammonium-, Alkalimetall-, Erdalkalimetall- und/oder Eisen-Salze der Phosphonsäureester der Formel (I)
   - mindestens einem Verdünnungsmittel und
   - gegebenenfalls Zusatzstoffen herstellt,
2. die so erhaltene Vormischung mit
   • feinkörnigem Getreidemehl,
   • Kartoffelzubereitung,
   • gegebenenfalls Hefe,
   • gegebenenfalls Bindemittel und
   • gegebenenfalls Zusatzstoffen
   versetzt,
3. die resultierende Mischung gegebenenfalls mit soviel Wasser verrührt, dass ein homogener Teig entsteht,
4. den Teig extrudiert und zerkleinert und
5. das anfallende Produkt trocknet.

Schließlich wurde gefunden, dass die neuen Schneckenköder sehr gut zur Bekämpfung von terrestrischen Schnecken verwendbar sind.

Überraschenderweise zeigen die erfindungsgemäßen Köder bei der Bekämpfung von Schnecken eine deutlich bessere Wirksamkeit als die bekannten Köder für den gleichen Anwendungszweck.

Die erfindungsgemäßen Schneckenköder sind durch die aufgeführten Bestandteile charakterisiert.

Bei den molluskiziden Komponenten, die in den erfindungsgemäßen Schneckenködern enthalten sind, handelt es sich entweder um
a) eines oder mehrere Ammonium-, Alkalimetall-, Erdalkalimetall- und/oder Eisen-Salze der Phosphonsäureester der Formel (I),
   oder um
b) eines oder mehrere Ammonium-, Alkalimetall-, Erdalkalimetall- und/oder Eisen-Salze der Phosphonsäureester der Formel (I) im Gemisch mit einem oder mehreren Magnesium-, Calcium- und/oder Eisen-Salzen
   oder um
c) Phosphonsäureester der Formel (I) im Gemisch mit einem oder mehreren Magnesium-, Calcium- und/oder Eisen-Salzen
   oder um
d) Methiocarb oder um
e) Metaldehyd.

Bevorzugt sind Phosphonsäureester der Formel (Ia) 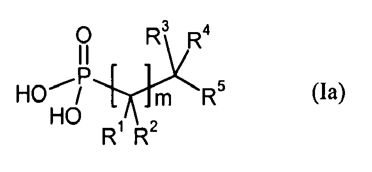 in welcher
R¹, R², R³, R⁴ und R⁵ unabhängig voneinander jeweils für Wasserstoff, C₁-C₄-Alkyl, CO₂H, CH₂CO₂H, PO₃H₂, OH, Halogen, CN, NH₂ stehen und
m für die Zahlen 0, 1, 2, 3, 4 oder 5 steht.
R¹, R², R³, R⁴ und R⁵ stehen bevorzugt unabhängig voneinander jeweils für Wasserstoff, Methyl, Ethyl, n-Propyl, iso-Propyl, n-Butyl, iso-Butyl, sec-Butyl, tert-Butyl, PO₃H₂, CO₂H, CH₂CO₂H, OH.
m steht bevorzugt für die Zahlen 0, 1 oder 2.

Ebenfalls bevorzugt sind Phosphonsäureester der Formel (Ib) 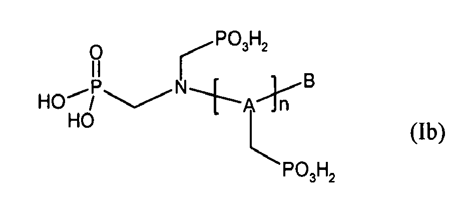 in welcher
- A: für C₁-C₆-Alkyl, C₁-C₆-Alkylamino, C₁-C₆-Alkoxy steht, wobei zwei Heteroatome nicht direkt aneinander gebunden sind,
- B: für H, OH, CH₂PO₃H₂, CN, Halogen, NH₂, C₁-C₈-Alkylamin oder C₂-C₁₆-Dialkylamin steht,
- n: für die Zahlen 0, 1, 2, 3, 4 steht.
- A: steht bevorzugt für die nachfolgenden Gruppierungen: 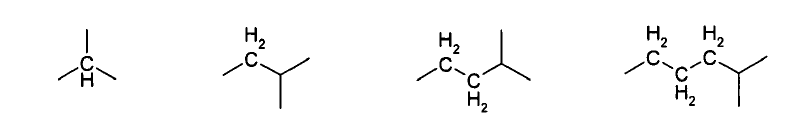 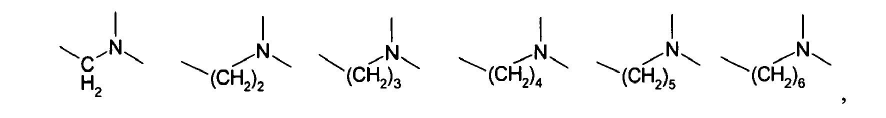
wobei das links gezeigte Kohlenstoffatom an den Stickstoff in Formel (Ib) gebunden ist.
- B: steht bevorzugt für H, OH oder CH₂PO₃H₂.
- n: steht bevorzugt für die Zahlen 0, 1 oder 2

Diese Restedefinitionen können untereinander, also auch zwischen den angegebenen bevorzugten Bereichen beliebig kombiniert werden. Ebenso können einzelne Definitionen entfallen. Erfindungsgemäß bevorzugt sind die Verbindungen der Formel (I), in welchen eine Kombination der vorstehend als bevorzugt aufgeführten Bedeutungen vorliegt. Die oben aufgeführten allgemeinen oder in Vorzugsbereichen aufgeführten Restedefinitionen gelten sowohl für die Endprodukte der Formel (I) als auch entsprechend für die jeweils zur Herstellung benötigten Ausgangs- oder Zwischenprodukte.

Besonders bevorzugt ist die Verbindungen der Formel (I-1)

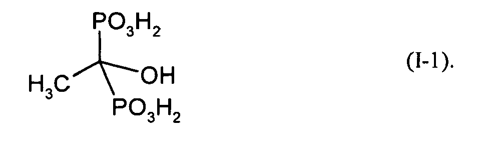

Ebenfalls besonders bevorzugt ist die Verbindungen der Formel (I-2)

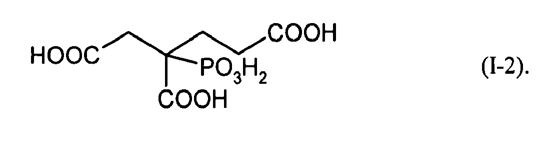

Ebenfalls besonders bevorzugt ist die Verbindungen der Formel (I-3)

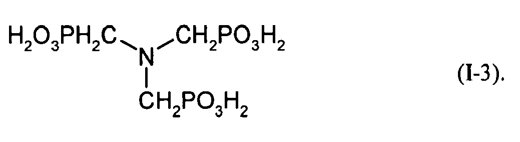

Ebenfalls besonders bevorzugt ist die Verbindungen der Formel (I-4)

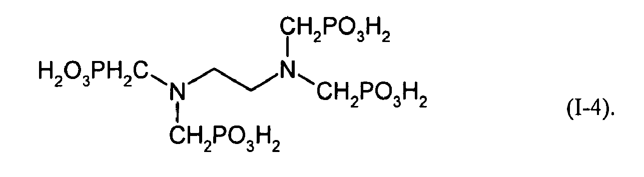

Ebenfalls besonders bevorzugt ist die Verbindungen der Formel (I-5)

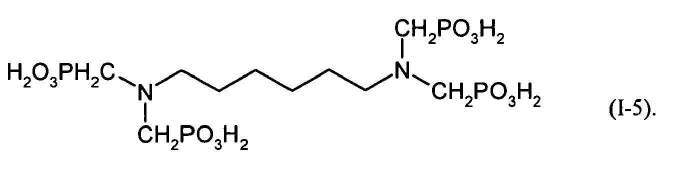

Ebenfalls besonders bevorzugt ist die Verbindungen der Formel (I-6)

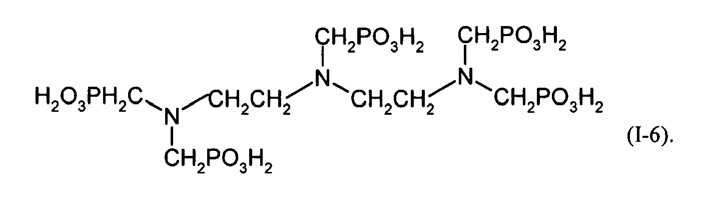

Ebenfalls besonders bevorzugt ist die Verbindungen der Formel (I-7)

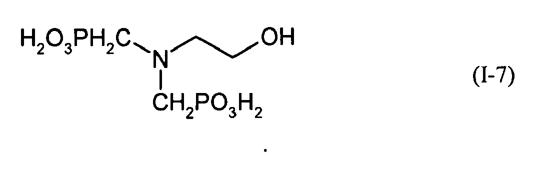

Als Salze der Phosphonsäureester kommen vorzugsweise deren Ammonium-, Lithium-, Natrium-, Kalium-, Magnesium-, Calcium-, Eisen-II- und Eisen-III-Salze in Frage. Bei diesen Salzen kann es sich um einheitliche oder gemischte Salze handeln. Unter einheitlichen Salzen sind hierbei solche Salze zu verstehen, die nur eines der genannten Kationen enthalten. Unter gemischten Salzen sind solche Salze zu verstehen, die verschiedene der genannten Kationen enthalten. Außerdem kommen auch solche Salze in Betracht, in denen nicht alle H₂O₃P-Gruppen der Phosphonsäureester in Salzform vorliegen.

Die Phosphonsäureester der Formel (I) und deren Salze sind bekannt oder lassen sich nach bekannten Methoden herstellen.

Neben der Phosphonsäureester der Formel (I) bzw. deren Salzen können in den erfindungsgemäßen Schneckenködern auch eines oder mehrere Magnesium-, Calcium- und/oder Eisen-Salze enthalten sein.

Als Salze der genannten Metalle kommen vorzugsweise Sulfate, Carbonate und Phosphate in Betracht. Beispielhaft genannt seien Magnesiumsulfat, Magnesiumcarbonat, Calciumsulfat, Calciumcarbonat, Eisen(II)sulfat, Eisen(III)sulfat, Eisen(II)hydrogensulfat, Eisen(III)hydrogensulfat, Eisen(II)hydrogenphosphat, Eisen(III)hydrogenphosphat, Eisen(II)hydrogencarbonat, Eisen(II)phosphat, Eisen(III)phosphat, Eisen(II)carbonat und Eisen(III)carbonat. Die Salze können als Hydrate oder in wasserfreier Form vorliegen. Besonders bevorzugt sind Eisen(II)phosphat, Eisen(III)phosphat, Eisen(II)hydrogenphosphat, Eisen-(III)hydrogenphosphat, Eisen(II)dihydrogenphosphat und Eisen(III)dihydrogenphosphat,

Als Getreidemehle können in den erfindungsgemäßen Schneckenködern handelsübliche Mehle, wie Weizenmehl, Roggenmehl, Reisstärke u.a., enthalten sein. Bevorzugt sind Hartweizenmehl und Weichweizenmehl. Das Mehl ist in feinkörniger Form vorhanden, vorzugsweise in Korngrößen unterhalb von 250 µ.

Als Bindemittel können in den erfindungsgemäßen Ködern alle üblichen, zur Herstellung derartiger Zubereitungen verwendbaren Kleber enthalten sein. Vorzugsweise in Betracht kommen modifizierte Stärke, Formaldehyd abspaltende Substanzen, gegebenenfalls teilverseiftes Polyvinylacetat und/oder Melasse.

Unter modifizierter Stärke sind im vorliegenden Fall handelsübliche Produkte dieses Typs zu verstehen. Bevorzugt ist kalt quellende Maisstärke.

Als Formaldehyd abspaltende Substanzen können alle üblichen Produkte enthalten sein, die zur Freisetzung von Formaldehyd geeignet sind. Bevorzugt sind Harnstoff-Formaldehyd-Kondensationsprodukte.

Als Polyvinylacetate, die gegebenenfalls in teilweise verseifter Form vorliegen können, kommen vorzugsweise die unter den Handelsnamen Mowilith^{®} (Firma Clariant) und Mowiol^{®} (Firma Clariant) bekannten Produkte in Frage.

Unter Melasse sind im vorliegenden Fall übliche, bei der Fabrikation von Zucker anfallende, sirupartige Mutterlaugen zu verstehen.

Als Zusatzstoffe, die in dem erfindungsgemäßen Ködern enthalten sein können, kommen vorzugsweise Konservierungsmittel, Farbstoffe, Schneckenlockstoffe, Mahlhilfsmittel, Additive, Bitterstoffe, Warmblüter-Repellents und Anticakingmittel in Betracht, sowie auch synthetische Aromen, Wasser und weitere molluskizide Wirkstoffe.

Als Konservierungsmittel kommen alle üblichen, für diesen Zweck geeigneten Substanzen in Betracht. Vorzugsweise genannt seien 2-Hydroxybiphenyl, Sorbinsäure, p-Hydroxy-benzaldehyd, p-Hydroxy-benzoesäure-methylester, Benzaldehyd, Benzoesäure, p-Hydroxy-benzoesäurepropylester und p-Nitro-phenol genannt.

Als Farbstoffe kommen alle üblichen, für diesen Zweck geeignete Substanzen in Betracht. Vorzugsweise genannt seien anorganische Pigmente, wie Eisenoxid, Titandioxid und Ferrocyanblau, sowie organische Farbstoffe, wie Anthrachinon-, Azo- und Metallphthalocyaninfarbstoffe erwähnt.

Als Schneckenlockstoffe kommen alle üblichen, für diesen Zweck geeigneten Substanzen in Betracht. Beispielhaft genannt seien Pflanzenextrakte und deren Folgeprodukte, sowie Produkte tierischer Herkunft.

Als Mahlhilfsmittel kommen alle für diesen Zweck geeigneten Substanzen in Frage. Beispielhaft genannt seien Kaoline, Tonerden, Talkum, Kreide, Quarzpulver und hochdispersen Kieselsäure.

Als Additive kommen Substanzen in Frage, die zur Einstellung des pH-Wertes in den Köder-Zubereitungen geeignet sind. Beispielhaft genannt sei Zitronensäure.

Als Bitterstoffe kommen alle für diesen Zweck üblichen Substanzen in Frage. Beispielhaft genannt sei Denatonium-benzoat.

Als Warmblüter-Repellents, die eine abweisende Wirkung auf warmblütige Lebewesen, wie Hunde oder Igel, ausüben, kommen alle für diesen Zweck üblichen Substanzen in Betracht. Beispielhaft genannt sei Nonylsäure-vanillylamid.

Als Anticakingmittel kommen alle für diesen Zweck üblichen Stoffe in Betracht, die ein Verklumpen und Zusammenbacken verhindern. Beispielhaft genannt seien Feuchtigkeit adsorbierende Pulver, wie Kieselgur, pyrogene Kieselsäuren, Tricalciumphosphat, Calciumsilikate, Aluminiumoxid, Magnesiumoxid, Magnesiumcarbonat, Zinkoxid, Stearate und Fettamine.

Neben wenigstens einem der oben aufgeführten molluskiziden Wirkstoffe könenn die erfindungsgemäßen Schneckenköder zusätzliche molluskizide Wirkstoffe enthalten. Als zusätzliche molluskizide Wirkstoffe kommen alle für diesen Zweck geeigneten Substanzen in Betracht. Beispielhaft genannt sei Thiodicarb.

Der Gehalt an den einzelnen Komponenten kann in den erfindungsgemäßen Schneckenködern innerhalb eines bestimmten Bereiches variiert werden. So liegen die Konzentrationen
- an Phosphonsäureester der Formel (I) und/oder deren Ammonium-, Alkalimetall-, Erdalkalimetall- und/oder Eisen-Salzen, gegebenenfalls im Gemisch mit einem oder mehreren Magnesium-, Calcium- und/oder Eisen-Salzen im Allgemeinen zwischen 0,2 und 25 Gew.-%, vorzugsweise zwischen 1,0 und 10 Gew.-%.
- An Kartoffelzubereitung zwischen 10 und 50 Gew.-%, vorzugsweise zwischen 20 und 40Gew.-%,
- An Hefe zwischen 0 und 15 Gew.-%, vorzugsweise zwischen 4 und 10 Gew.-%,
- an Getreidemehl im Allgemeinen zwischen 20 und 80 Gew.-%, vorzugsweise zwischen 30 und 60 Gew.-%,
- an Bindemittel im Allgemeinen zwischen 0 und 25 Gew.-%, vorzugsweise zwischen 5 und 20 Gew.-%,
- an Zusatzstoffen im Allgemeinen zwischen 0 und 5,0 Gew.-%, vorzugsweise zwischen 2 und 5,0 Gew.-%.

Bei der Durchführung des erfindungsgemäßen Verfahrens werden vorzugsweise diejenigen Komponenten eingesetzt, die bereits im Zusammenhang mit der Beschreibung der erfindungsgemäßen Schneckenköder als bevorzugte Bestandteile genannt wurden

Als Verdünnungsmittel können bei der Durchführung inerte organische Solventien und/oder Wasser eingesetzt werden. Vorzugsweise wird Wasser verwendet.

Die Mengen an den einzelnen Komponenten werden so gewählt, dass die Substanzen in den erfindungsgemäßen Schneckenködern in denjenigen Gewichtsverhältnissen vorhanden sind, die oben erwähnt wurden. Die Menge an Wasser bzw. an Verdünnungsmittel wird jedoch so bemessen, dass in der Stufe (3) des Verfahrens ein Teig entsteht. Die eingesetzte Menge an Wasser liegt im allgemeinen zwischen 25 und 35 Gew.-%, vorzugsweise zwischen 27 und 34 Gew.-%, bezogen auf die übrigen Bestandteile. In den erfindungsgemäßen Schneckenködern ist der Gehalt an Wasser aber deutlich niedriger, weil das zunächst feucht anfallende Produkt in der Stufe (5) des Herstellungsverfahrens noch getrocknet wird. Es verbleibt praktisch nur die im Getreidemehl vorhandene Restfeuchtigkeit.

Die Temperaturen können bei der Durchführung des erfindungsgemäßen Verfahrens in einem bestimmten Bereich variiert werden. Man arbeitet bei der Durchführung
- der Herstellung der Vormischung (Stufe 1) im Allgemeinen bei Temperaturen zwischen 0°C und 30°C, vorzugsweise bei Raumtemperatur,
- des Mischens der Vormischung mit weiteren Bestandteilen (Stufe 2) im Allgemeinen bei Temperaturen zwischen 0°C und 30°C, vorzugsweise bei Raumtemperatur,
- des Verrührens mit Wasser (Stufe 3) im Allgemeinen bei Temperaturen zwischen 0°C und 40°C, vorzugsweise zwischen 10°C und 30°C,
- der Extrusion (Stufe 4) im Allgemeinen bei Temperaturen zwischen 20°C und 60°C, vorzugsweise zwischen 30°C und 50°C und
- des Trocknens (Stufe 5) im Allgemeinen bei Temperaturen zwischen 20°C und 90°C, vorzugsweise zwischen 30°C und 80°C.

Bei der Durchführung der Stufen (1) bis (3) und (5) des erfindungsgemäßen Verfahrens arbeitet man im Allgemeinen unter Atmosphärendruck. Es ist aber auch möglich, den Trocknungsprozess in der Stufe (5) unter vermindertem Druck durchzuführen. Bei der Durchführung der Stufe (4) arbeitet man im Allgemeinen unter erhöhtem Druck, vorzugsweise unter einem Druck zwischen 30 und 100 bar.

Bei der Durchführung des erfindungsgemäßen Verfahrens können alle für derartige Prozesse üblichen Geräte eingesetzt werden. So kommen für die Mischvorgänge in den Stufen (1) bis (3) übliche Mischer in Frage, in die während des Mischvorganges zusätzliche Substanzen, wie Getreidemehl, Bindemittel, Verdünnungsmittel bzw. Wasser gegeben werden können. Vorzugsweise verwendbar sind Pflugscharmischer, Paddelmischer und Zwei-Wellen-Extruder.

Zur Extrusion in der Stufe (4) kommen in der Lebensmittelindustrie übliche Geräte in Betracht, mit deren Hilfe ein Teig durch Lochscheiben strangförmig verpresst und anschließend zerkleinert werden kann.

Zum Trocknen des feuchten Produktes in der Stufe (5) kommen übliche Apparate in Frage, die zum Entzug von Feuchtigkeit aus teilchenförmigen Festsubstanzen geeignet sind. In einer bevorzugten Ausführungsform arbeitet man in der Weise, dass man das feuchte Produkt zunächst in einem Wirbelbett vortrocknet und anschließend in einem separaten Gerät auf die gewünschte Endfeuchtigkeit trocknet.

Im Einzelnen geht man bei der Durchführung des erfindungsgemäßen Verfahrens so vor, dass man
- in der Stufe (1) eine Lösung oder Suspension ("Vormischung") aus Phosphonsäureester bzw. deren Salzen,
gegebenenfalls im Gemisch mit weiteren der genannten Metall-Salze,
sowie Verdünnungsmittel, vorzugsweise Wasser und
gegebenenfalls einem oder mehreren weiteren molluskiziden Wirkstoffen sowie gegebenenfalls Zusatzstoffen, wie beispielsweise Konservierungsstoffen, Farbstoffen, Additiven usw. herstellt,
- in der Stufe (2) die erhaltene Vormischung mit feinkörnigem Getreidemehl, mit Kartoffelzubereitung, gegebenenfalls mit Hefe, gegebenenfalls mit Bindemittel und gegebenenfalls mit weiteren Zusatzstoffen zu einem homogenen Produkt vermischt,
- in der Stufe (3) soviel Wasser unter Mischen und Kneten hinzufügt, dass ein Teig entsteht,
- in der Stufe (4) den Teig unter Druck extrudiert und zerkleinert und
in der Stufe (5) das teilchenförmige Material zunächst vor- und dann nachtrocknet und anschließend auf Raumtemperatur abkühlt.

In einer alternativen Ausführungsform können in Stufe (1) auch pulvrige Vormischungen bereitgestellt werden (z.B. bestehend aus Getreidemehl, Kartoffelzubereitung, Metall-Salz bzw. Metall-Salzen, gegebenenfalls Hefe), welche in der Stufe 2 mit der Phosphonsäurelösung und der Kleberlösung zu einem Teig verarbeitet werden.

In einer alternativen Ausführungsform kann Stufe (3) entfallen, insbesondere wenn der Teig bereits die gewünschte Konsistenz aufweist.

In einer alternativen Ausführungsform erfolgt der Übergang von Vor- und Nachtrocknen kontinuierlich.

Die Größe der Schneckenköder kann bei der Durchführung des erfindungsgemäßen Verfahrens in der jeweils gewünschten Weise innerhalb eines bestimmten Bereiches variiert werden. Man zerkleinert den Teig im Allgemeinen so, dass Pellets oder strangförmige Teilchen entstehen. Der durchschnittliche Durchmesser beziehungsweise die durchschnittliche Länge der Teilchen liegt im Allgemeinen zwischen 1 und 4 mm, vorzugsweise zwischen 1,5 und 3 mm.

Die erfindungsgemäßen Schneckenköder eignen sich sehr gut zur Bekämpfung von terrestrischen Schnecken in der Landwirtschaft und im Gartenbau. Zu den Schnecken gehören alle landlebenden Nackt- und Gehäuseschnecken, welche in der Mehrzahl als polyphage Schädlinge landwirtschaftlicher und gärtnerischer Kulturen auftreten. Wichtige derartige Schädlinge sind Nacktschnecken, wie Arion rufus (Große Wegschnecke), Arion ater und andere Arionidae, Limax-Arten, ferner Ackerschnecken, wie Deroceras reticulatum und agreste aus der Familie Limacidae, sowie Arten aus der Familie Milacidae, und außerdem schädliche Gehäuseschnecken, wie solche der Gattung Cepaea, Discus, Helicigona und Helicella.

Bei der Bekämpfung von Schnecken kann die Aufwandmenge an den erfindungsgemäßen Ködern innerhalb eines größeren Bereiches variiert werden. Im Allgemeinen verwendet man zwischen 2 und 15 kg Schneckenköder pro Hektar, vorzugsweise zwischen 3 und 7 kg pro Hektar.

Die erfindungsgemäßen Schneckenköder können nach üblichen Methoden, wie beispielsweise durch Streuen und Eindrillen, ausgebracht werden.

Die Erfindung wird durch die folgenden Beispiele veranschaulicht.

### Herstellungsbeispiele

### Beispiel 1: Herstellung von erfindungsgemäßem Schneckenköder

In einem Pflugscharmischer werden die pulvrigen Bestandteile vorgemischt. Hierzu werden 42 kg Hartweizenmehl mit einer Korngröße von unter 250µm, 8 kg Hefe, 35 kg Kartoffelzubereitung und 2 kg Eisen-III-phosphat 5 Minuten homogenisiert. Die Feststoffmischung wird danach in einen Teigkneter transferiert. 3 kg einer ca. 60 %-igen Phosphonsäure der Formel (I) (HEDP; Handelsprodukt der Firma ZSM; pH 1) werden mit 700 g Wasser verdünnt und anschließend langsam unter Rühren und bei Raumtemperatur in den Teigkneter gegeben. Nach vollständiger Zugabe wird noch 10 Minuten nachgemischt.

17 kg einer ca 60 %igen Polyvinyacetat-Dispersion (Mowilith®) werden mit ca. 700 g Wasser verdünnt und anschließend ebenfalls unter Rühren in den Teigkneter gegeben. Auch hier wird wie oben nach vollständiger Zugabe 10 Minuten nachgerührt und geknetet. Der dabei entstehende homogenen Teig wird bei 40°C unter einem Druck von 60 bar durch eine Lochscheibe mit Bohrungen von 3 mm in Form von Strängen extrudiert, die mit Hilfe von rotierenden Messern in 2 bis 3 mm lange, zylindrische Stücke zerkleinert werden. Das anfallende Material wird in einem Wirbelbett 30 Minuten lang durch einen Luftstrom getrocknet, dessen Temperatur von 20°C an kontinuierlich gesteigert wird und am Ende des Trocknungsvorgangs die Abluft eine Temperatur von 55°C erreicht. Danach lässt man das Produkt auf Raumtemperatur abkühlen und bewahrt es 3 Tage offen an der Luft auf, so dass sich die Gleichgewichtsfeuchte in den Pellets einstellt. Man erhält auf diese Weise ca. 100 kg an Schneckenköder in Form von zylindrischen Pellets.

### Biologisches Beispiel 1

### Wirkung der erfindungsgemäßen Schnecken Köder auf Schnecken im Freiland

### Testschnecken: Arion species

### Testkultur: Tagetes patula

### Testmethode:

Freilandversuch; Landwirtschaftszentrum Monheim, Monheim Süd, Deutschland,

Ausstreuen der Köderformulierungen mit 5 g Formulierung je m² auf 1 qm große Parzellen mit 4 Wiederholungen. Parzellen waren mit Schnecken Zäunen umgeben um zu verhindern, dass die sehr mobilen Schnecken die Parzellen verlassen und in Nachbarparzellen wandern.

Die Parzellen waren mit je 4 Tagetes Pflanzen bepflanzt. Jede Parzelle wurde mit 17 *Arion* Schnecken besetzt.

Die Auswertung erfolgte 3, 7 und 14 Tagen nach der Applikation durch Bestimmung des Fraßschadens (% Pflanzen mit Fraßschaden) an den Versuchspflanzen. Darüber hinaus wurde auch nach eventuellen Phytotoxis-Symptomen ausgewertet.

Der Wirkungsgrad der Testsubstanz beträgt 100 % (nach Abbott), wenn kein Fraßschaden festgestellt wurde bzw. er beträgt 0 %, wenn der Fraßschaden genau so stark ist wie in der Kontrolle.

Es zeigt sich, dass die erfindungsgemäßen Zusammensetzungen (Variante 2) eine Wirkung zeigen, die vergleichbar ist mit Produkten, die Melasse, einen bekannten Schneckenlockstoff enthalten (Variante 3).

Die Wirkung ist ebenfalls vergleichbar mit einem erfolgreichen kommerziell erhältlichen Produkt (Variante 4).

**Tabelle 1**

| Variante | Präparat | Dosis Produkt g/qm | Fraßschaden in % bzw. % Wirkung | | | Phytotoxis symptome 1-14 DAT |
|---|---|---|---|---|---|---|
| | | | 3 DAT | 7 DAT | 14 DAT | |
| 1 | Kontrolle | | (11%) | (63) | (92) | - |
| | (% Fraßschaden) | | | | | |
| 2 | 2,18% Fe (III) Phosphat & Phosphonsäure (I-1) | 5 | 74 | 95 | 96 | Keine |
| | 8% Hefe | | | | | |
| | 34,9% Kartoffelpüree | | | | | |
| | 45% Hartweizen | | | | | |
| 3 | 2,18% Fe (III) Phosphat & Phosphonsäure (I-1) | 5 | 78 | 95 | 87 | Keine |
| | 7% Melasse | | | | | |
| | 80% Hartweizen | | | | | |
| 4 | Ferramol ® | 5 | 78 | 96 | 97 | keine |
| | 1 RB | | | | | |

| | | | | | | |
|---|---|---|---|---|---|---|
| DAT = Days after treatment = Tage nach der Applikation der molluskiziden Zusammensetzung | | | | | | |

Die Köder wurden durch das oben beschriebene Verfahren hergestellt. Die Differenz zu 100% ergibt sich z.B. aus Wasser und Bindemittel, die keinen Einfluss auf die Attraktivität haben und in allen Zusammensetzungen in fast identischen Mengen vorhanden sind.

### Biologisches Beispiel 2

### Wirkung der erfindungsgemäßen Schnecken Köder auf Schnecken im Freiland

### Testschnecken: Arion species

### Testkultur: Tagetes patula

### Testmethode:

Freilandversuch; Landwirtschaftszentrum Monheim, Monheim Süd, Deutschland,

Ausstreuen der Köderformulierungen mit 5 g Formulierung je m² auf 1 qm große Parzellen mit 4 Wiederholungen. Aufgrund sehr starken Fraßaktivität und der Größe der Schnecken wurde nach 2 Tagen in allen Parzellen eine Nachbehandlung durchgeführt. Die Parzellen waren mit Schnecken Zäunen umgeben um zu verhindern das die sehr mobilen Schnecken die Parzellen verlassen und in Nachbarparzellen wandern.

Die Parzellen waren mit je 20 Tagetes Pflanzen bepflanzt. Jede Parzelle wurde mit 20 *Arion* Schnecken besetzt.

Die Auswertung erfolgte 3, 7 und 14 Tagen nach der 1. Applikation durch Bestimmung des Fraßschadens (% Pflanzen mit Fraßschaden) an den Versuchspflanzen. Darüber hinaus wurde auch nach eventuellen Phytotoxissymptomen ausgewertet.

Der Wirkungsgrad der Testsubstanz beträgt 100 % (nach Abbott), wenn kein Fraßschaden festgestellt wurde bzw. er beträgt 0 %, wenn der Fraßschaden genau so stark ist wie in der Kontrolle.

Es zeigt sich, dass die erfindungsgemäßen Zusammensetzungen (Variante 2) eine Wirkung zeigen, die besser ist als die von Produkten, die Melasse, einen bekannten Schneckenlockstoff enthalten (Variante 3).

Die Wirkung ist ebenfalls besser als bei einem erfolgreichen kommerziell erhältlichen Produkt (Variante 4).

Insbesondere tritt die Wirkung schneller ein.

**Tabelle 2**

| Variante | Präparat | Dosis Produkt g/qm | Fraßschaden in % bzw. % Wirkung | | | Phytotoxis symptome 1-14 DAT |
|---|---|---|---|---|---|---|
| | | | 3 DAT | 7 DAT | 14 DAT | |
| 1 | Kontrolle | | (68%) | (76%) | (76%) | - |
| | (% Fraßschaden) | | | | | |
| 2 | 2,18% Fe (III) Phosphat & Phosphonsäure (I-1) | 5 | 76 | 73 | 73 | Keine |
| | 8% Hefe | | | | | |
| | 34,9% Kartoffelpüree | | | | | |
| | 45% Hartweizen | | | | | |
| 3 | 2,18% Fe (III) Phosphat & Phosphonsäure (I-1) | 5 | 33 | 28 | 30 | Keine |
| | 7% Melasse | | | | | |
| | 80% Hartweizen | | | | | |
| 4 | Ferramol ® | 5 | 47 | 52 | 55 | keine |
| | 1 RB | | | | | |

| | | | | | | |
|---|---|---|---|---|---|---|
| DAT = Days after treatment = Tage nach der Applikation der molluskiziden Zusammensetzung | | | | | | |

Die Köder wurden durch das oben beschriebene Verfahren hergestellt. Die Differenz zu 100% ergibt sich z.B. aus Wasser und Bindemittel, die keinen Einfluss auf die Attraktivität haben und in allen Zusammensetzungen in fast identischen Mengen vorhanden sind.

### Biologisches Beispiel 3

### Wirkung der erfindungsgemäßen Schnecken Köder auf Schnecken im Freiland

### Testschnecken: Deroceras reticulatum

### Testkultur: Kohl (Sorte Greyhound) 6-8 Blattstadium

Testmethode:
Semi-Freilandversuch; Potcanna Allotment site, Cardiff, Groß-Britanien,
Ausstreuen der Köderformulierungen mit 5 g Formulierung je m² auf 1 qm große Parzellen mit 5 Wiederholungen. Die Parzellen bestanden aus 1m² großen Kunststoffkisten mit für Schnecken nicht überkriechbaren Wänden. So konnten die sehr mobilen Schnecken die Parzellen nicht verlassen und in Nachbarparzellen wandern. Der Boden der Kisten war 10 cm hoch mit Blumenerde gefüllt.

Die Parzellen waren mit je 9 Kohl Pflanzen bepflanzt und wurde mit je 20 *Deroceras* Schnecken besetzt.

Die Auswertung erfolgte 3, 7 und 14 Tagen nach der 1. Applikation durch Bestimmung des Fraßschadens (% Pflanzen mit Fraßschaden) an den Versuchspflanzen. Darüber hinaus wurde auch nach eventuellen Phytotoxis-symptomen ausgewertet.

Der Wirkungsgrad der Testsubstanz beträgt 100 % (nach Abbott), wenn kein Fraßschaden festgestellt wurde bzw. er beträgt 0 %, wenn der Fraßschaden genau so stark ist wie in der Kontrolle.

Es zeigt sich, dass die erfindungsgemäßen Zusammensetzungen (Variante 2) eine Wirkung zeigen, die besser ist als die von Produkten, die Melasse, einen bekannten Schneckenlockstoff enthalten (Variante 3).

Die Wirkung ist ebenfalls besser als bei einem erfolgreichen kommerziell erhältlichen Produkt (Variante 4).

**Tabelle 3**

| Variante | Präparat | Dosis Produkt g/qm | Fraßschaden in % bzw. % Wirkung | | | Phytotoxis symptome 1-14 DAT |
|---|---|---|---|---|---|---|
| | | | 3 DAT | 7 DAT | 14 DAT | |
| 1 | Kontrolle | | (22,4%) | (37,7%) | (56%) | - |
| | (% Fraßschaden) | | | | | |
| 2 | 2,18% Fe (III) Phosphat & Phosphonsäure (I-1) | 5 | 62 | 72 | 73 | Keine |
| | 8% Hefe | | | | | |
| | 34,9% Kartoffelpüree | | | | | |
| | 45% Hartweizen | | | | | |
| 3 | 2,18% Fe (III) Phosphat & Phosphonsäure (I-1) | 5 | 19 | 44 | 64 | Keine |
| | 7%Melasse | | | | | |
| | 80% Hartweizen | | | | | |
| 4 | Ferramol ® | 5 | 64 | 62 | 61 | keine |
| | 1 RB | | | | | |

| | | | | | | |
|---|---|---|---|---|---|---|
| DAT = Days after treatment = Tage nach der Applikation der molluskiziden Zusammensetzung | | | | | | |

Die Köder wurden durch das oben beschriebene Verfahren hergestellt. Die Differenz zu 100% ergibt sich z.B. aus Wasser und Bindemittel, die keinen Einfluss auf die Attraktivität haben und in allen Zusammensetzungen in fast identischen Mengen vorhanden sind.

## Patentansprüche

1. Zusammensetzung enthaltend
- mindestens einen molluskiziden Wirkstoff
- Kartoffelzubereitung.

2. Zusammensetzung gemäß Anspruch 1, **dadurch gekennzeichnet, dass** die Kartoffelzubereitung erhältlich ist durch Zerkleinern und Trocknen von jeweils optional geschälten oder ungeschälten rohen oder gekochten Kartoffeln.

3. Zusammensetzung gemäß Anspruch 1 oder 2, **dadurch gekennzeichnet, dass** sie weiterhin Hefe enthält.

4. Zusammensetzung gemäß einem beliebigen der Ansprüch 1 bis 3, enthaltend
a) Phosphonsäureester der Formel (I) 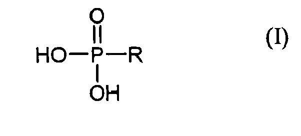 in welcher R für C₁-C₁₀-Alkyl steht,
welches einfach oder mehrfach, gleich oder verschieden durch PO₃H₂, CO₂H, OH, NH₂, CN, Halogen, C₁-C₈-Alkylamin oder C₂-C₁₆-Dialkylamin substituiert ist und
welches gegebenenfalls durch 1-6 Heteroatome aus der Reihe N, O, S, P unterbrochen ist, wobei Heteroatome nicht direkt miteinander verknüpft sind;
und
Ammonium-, Alkalimetall-, Erdalkalimetall- und/oder Eisen-Salze;
oder
b) Ammonium-, Alkalimetall-, Erdalkalimetall- und/oder Eisen-Salze der Phosphonsäureester der Formel (I)
oder
c) Methiocarb
oder
d) Metaldehyd.

5. Zusammensetzung gemäß einem beliebigen der Ansprüche 1 bis 4, enthaltend weiterhin
- feinkörniges Getreidemehl und/oder
- Bindemittel und/oder
- weitere Zusatzstoffe.

6. Verwendung einer Kartoffelzubereitung zur Verbesserung der Attraktivität von molluskiziden Zusammensetzungen für Schnecken, wobei die Kartoffelzubereitung erhältlich ist durch Pürieren und Trocknen jeweils optional geschälter oder ungeschälter gekochter oder roher Kartoffeln.

7. Verwendung einer Kartoffelzubereitung gemäß Anspruch 6, **dadurch gekennzeichnet, dass** die Kartoffelzubereitung einer molluskiziden Zusammensetzung in einer Endkonzentration von 10 bis 50 Gew.-% zugegeben wird.

8. Verwendung einer Kartoffelzubereitung gemäß Anspruch 6, **dadurch gekennzeichnet, dass** ausserdem zusätzlich Hefe zugegeben wird.

9. Verwendung von Zusammensetzungen gemäß Anspruch 1 zur Bekämpfung von terrestrischen Schnecken, **dadurch gekennzeichnet, dass** man die Zusammensetzung nach Anspruch 1 auf den Lebensraum der Schnecken ausbringt.

10. Verfahren zur Herstellung von Zusammensetzungen gemäß Anspruch 4, **dadurch gekennzeichnet, dass** man
• in der Stufe (1) eine Lösung oder Suspension ("Vormischung") aus Phosphonsäureester der Formel (I) gemäß Anspruch 1 bzw. deren Salzen,
gegebenenfalls im Gemisch mit weiteren Metall-Salzen,
sowie Verdünnungsmittel, vorzugsweise Wasser und
gegebenenfalls einem oder mehreren weiteren molluskiziden Wirkstoffen sowie gegebenenfalls Zusatzstoffen, wie beispielsweise Konservierungsstoffen, Farbstoffen, Additiven usw. herstellt,
• in der Stufe (2) die erhaltene Vormischung mit feinkörnigem Getreidemehl, mit Kartoffelzubereitung, gegebenenfalls mit Hefe, gegebenenfalls mit Bindemittel und gegebenenfalls mit weiteren Zusatzstoffen zu einem homogenen Produkt vermischt,
• in der Stufe (3) soviel Wasser unter Mischen und Kneten hinzufügt, dass ein Teig entsteht,
• in der Stufe (4) den Teig unter Druck extrudiert und zerkleinert und
• in der Stufe (5) das teilchenförmige Material zunächst vor- und dann nachtrocknet und anschließend auf Raumtemperatur abkühlt.

11. Verfahren zur Herstellung von Zusammensetzungen gemäß Anspruch 4, **dadurch gekennzeichnet, dass** man
• zunächst eine Vormischung aus allen pulvrigen Bestandteilen herstellt und diese dann mit der Lösung einer Phosphonsäure der Formel (I) gemäß Anspruch 1, einem Verdünnungsmittel und einem Bindemittel zu einem Teig verarbeitet,
• den Teig unter Druck extrudiert und zerkleinert und
• das teilchenförmige Material zunächst vor- und dann nachtrocknet und anschließend auf Raumtemperatur abkühlt.

12. Verfahren zum Bekämpfen von terrestrischen Schnecken, **dadurch gekennzeichnet, dass** man Zusammensetzungen gemäß Anspruch 1 auf terrestrische Schnecken und/oder ihren Lebensraum einwirken lässt.
